(19) Europäisches Patentamt
European Patent Office
Office européen des brevets

(11) Publication number: 0 038 682 B1

(12) EUROPEAN PATENT SPECIFICATION

(45) Date of publication of patent specification: 08.08.84

(51) Int. Cl.³: C 01 B 3/22, C 01 B 33/20, B 01 J 21/06

(21) Application number: 81301684.7

(22) Date of filing: 16.04.81

# (54) Process for the production of synthesis gas from methanol.

(30) Priority: 23.04.80 GB 8013361

(43) Date of publication of application: 28.10.81 Bulletin 81/43

(45) Publication of the grant of the patent: 08.08.84 Bulletin 84/32

(84) Designated Contracting States: BE DE FR GB IT NL

(56) References cited:
EP - A - 0 009 976
DE - A - 2 759 341
FR - A - 1 338 872
GB - A - 1 357 123
GB - A - 1 359 367
GB - A - 1 577 069
GB - A - 2 024 790

JOURNAL OF CATALYSIS, Vol. 27, 1972 New York F. MORELLI et al. "Some Remarks on the Activation Energy Variation in the Methanol Decomposition on Zinc Oxide" pages 471 to 474

(73) Proprietor: The British Petroleum Company p.l.c.
Britannic House Moor Lane
London EC2Y 9BU (GB)

(72) Inventor: Ball, William John
The British Petroleum Company Ltd. Chertsey Road
Sunbury-On-Thames Middlesex TW16 7LN (GB)
Inventor: Stewart, David Gordon
The British Petroleum Company Ltd. Chertsey Road
Sunbury-On-Thames Middlesex TW16 7LN (GB)

(74) Representative: Harry, John et al,
c/o The British Petroleum Company plc Patents Division Chertsey Road
Sunbury-on-Thames Middlesex TW16 7LN (GB)

EP 0 038 682 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for the production of a mixture of carbon monoxide and hydrogen, hereinafter referred to as synthesis gas, by the catalysed decomposition of methanol and in particular to the use of a synthetic silica-based material as catalyst in the process.

There is a growing awareness of the great potential of methanol as a starting material for chemicals production based on carbonylation and hydroformylation reactions, e.g. in acetic acid and oxo alcohol production.

Many of the routes to such chemicals involve the use of synthesis gas, which can be produced by the decomposition of methanol, according to the following reaction:

$$CH_3OH \rightarrow CO + 2H_2$$

Although in the past attention has principally been directed towards converting synthesis gas into products such as methanol, it is now envisaged that there will be a need in the near future to convert methanol into synthesis gas. This is being brought about by the many projects to manufacture methanol on a very large scale in certain favourable locations, e.g. the Middle East, followed by the transport of methanol in bulk to sites where a ready supply of synthesis gas is required for further processing. Such a scheme is very advantageous, because methanol is a non-corrosive liquid under normal conditions and can consequently be shipped without difficulty or danger over great distances.

The decomposition of methanol was studied in the early part of this century, principally because it was considered that the catalyst which gave the maximum decomposition into carbon monoxide and hydrogen would be particularly suitable for the synthesis of methanol from these gases under pressure. [Industrial and Engineering Chemistry *20*, (7), page 694, (1928)]. Most of these studies were of an academic nature and were mainly concerned with zinc-containing catalysts [eg. Journal of Catalysis, *27*, page 471, (1972)].

A study directed towards a process for the production of synthesis gas was reported in Industrial and Engineering Chemistry, 40, (4), page 583, (1948). In this, methanol is decomposed to carbon monoxide and hydrogen over a Filtros supported mixture of copper and nickel oxides maintained at a temperature in the range 350 to 400°C. The synthesis gas produced by this method was never more than 97% pure, the by-products being 0.2% carbon dioxide and 2% inerts, including nitrogen and gaseous hydrocarbons. A major disadvantage of this process was the high rate of carbon deposition and because of this the catalyst required frequent regenerations.

More recently we found that a catalyst comprising a supported metal of Group VIII of the Periodic Table either alone or in combination with one or more other metals from Groups I to VIII of the Periodic Table, particularly a mixture of rhodium and copper supported on silica, can produce synthesis gas in high yield and selectivity. Such a process is described and claimed in British Patent Specification GB—A—1,577,069.

Another catalyst found by us to be effective in decomposing methanol to synthesis gas is the amorphous aluminosilicate produced by reacting together a source of silica, a source of alumina, a source of alkali metal, water and a polyamine other than a diamine. Such a process is described in our European application publication No. EP—A—0009976.

UK Patent Application No 2024790A describes a silica-based material comprising crystalline silica which has been modified with one or more elements which have entered the crystalline lattice of the silica in place of silicon atoms of the silica or in the form of salts of bisilicic or polysilicic acids. As elements which can be used for obtaining the modified silicas it is reported that chromium, beryllium, titanium, vanadium, manganese, iron, cobalt, zinc, zirconium, rhodium, silver, tin, antimony and boron are preferred. The silica-based synthetic materials are said to be useful as catalysts for a large number of reactions, including the conversion of dimethyl ether and/or methanol or other lower alcohols into hydrocarbons such as olefins and aromatic hydrocarbons.

We have now found that crystalline silica modified by inclusion of cobalt in the crystal lattice in place of a proportion of the silicon atoms is an active catalyst for the decomposition of methanol to synthesis gas.

Accordingly the present invention provides a process for the production of synthesis gas from methanol which process comprises contacting methanol in the vapour phase at elevated temperature with a catalyst comprising a crystalline silica modified by inclusion of cobalt in the crystal lattice in place of a proportion of the silicon atoms, the atomic ratio of cobalt to silicon in the modified crystalline silica being in the range from 1:5 to 1:500.

Methanol is available commercially on a very large scale and using the process of the invention it can be readily converted into a stream of synthesis gas for further down-stream processing. The methanol may be anhydrous or it may contain water up to, for example, 90% w/w. Alternatively water may be introduced as a separate feed in the form of steam. Furthermore the methanol may be diluted with carbon monoxide, carbon dioxide or recycled synthesis gas. Since the decomposition of methanol is endothermic the use of diluents offers a convenient method for introducing heat into the reaction.

With regard to the catalyst, modified crystalline silicas are characterised by the presence of a single crystalline phase, and an atomic ratio of cobalt to silicon in the range from 1:5 to 1:500.

The modified crystalline silica may be prepared by mixing in a liquid medium comprising water, an alcohol or a mixture thereof, a source of silicon, a source of cobalt, a nitrogeneous base and optionally, a mineralising agent and/or an inorganic base, maintaining the mixture under such conditions of temperature and pressure and for a time sufficient to effect crystallisation of the modified crystalline silica, separating the modified crystalline silica product from the liquid medium and thereafter calcining the product.

Suitable sources of silica include, for example, sodium silicate, silica hydrosol, silica gel, silica sol and silicic acid. The preferred source of silica is an aqueous colloidal dispersion of silica particles. A suitable commercially available source of silica is Ludox Colloidal silica marketed by Du Pont (Ludox is a Registered Trade Mark).

Suitable sources of cobalt include the oxide, hydroxide, salts such as the nitrate and alkoxy derivatives such as the acetate.

Suitable sources of nitrogenous base include amines and substituted amines such as the alkanolamines. A preferred nitrogenous base is a quaternary ammonium compound, which may be a tetraalkylammonium compound in which the alkyl group contains from 1 to 5 carbon atoms or a tetraarylammonium compound in which the aryl group is a phenyl or an alkylphenyl group.

Suitable mineralising agents include alkali metal and alkaline earth metal hydroxides and halides, for example LiOH, NaOH, $Ca(OH)_2$, KBr, NaBr, NaI, $CaI_2$, $CaBr_2$, $NaNO_3$ and $KNO_3$.

Suitable inorganic bases include alkali metal and alkaline earth metal hydroxides, for example NaOH, KOH and $Ca(OH)_2$, and ammonia.

The amount of nitrogenous base and/or inorganic base employed may suitably be lower than the stoichiometric amount relative to silica and is preferably from 0.05 to 0.50 mole % per mole of silica.

The mixture may suitably be maintained at a temperature of from 100 to 220, preferably from 100 to 200°C for a period of from a few hours to several days, preferably for about 7 days. The mixture is preferably maintained at the required temperature in a closed vessel such as an autoclave under autogenous pressure.

The modified crystalline silica may suitably be separated from the liquid medium after cooling by filtration. After separation the silica is preferably washed to remove any exchangeable cationic impurities, preferably with boiling distilled water having dissolved therein an ammonium salt such as the nitrate or acetate.

Calcination of the modified crystalline silica may be effected by heating in air at a temperature in the range from 300 to 700°C, preferably at about 550°C for a period of from 2 to 24 hours.

With regard to the process for the production of synthesis gas the methanol may suitably be contacted with the modified crystalline silica catalyst at a temperature in the range from 200 to 600, preferably from 300 to 450°C, and at a pressure up to 10 atmospheres. Since the decomposition of methanol is equilibrium limited it is preferred to employ high temperatures in combination with low pressures.

The process may be operated batchwise or continuously, continuous operation being preferred. The contact time, as hereinafter defined, for continuous operation may be up to 30 seconds, preferably from 1 to 5 seconds. For the purpose of this specification the contact time is defined as follows:

Volume of catalyst in millilitres

Total volume of gas (in millilitres/second at NTP) The catalyst may be used either as a fixed bed or as a fluidised bed.

The decomposition of methanol produces 2 volumes of hydrogen for every volume of carbon monoxide. This ratio can be altered if so desired by treating the hydrogen/carbon monoxide mixture in a manner well-known to those skilled in the art i.e. by the so-called "shift reaction".

The catalytic activity of the modified crystalline silica catalyst may be further enhanced by the addition of a metal of Group VIII of the Periodic Table either alone or in combination with one or more other metals of Groups I to VIII of the Periodic Table. The Periodic Table referred to is that contained in the Handbook of Chemistry and Physics, 44th Edition, published by the Chemical Rubber Publishing Company. Group VIII metals which are particularly effective include, for example, rhodium and cobalt, both alone and in combination with other metals. The Group VIII metal may be admixed with one or more other Group VIII metals and/or with metals of Groups I to VII of the Periodic Table, such as iron, copper, chromium, gold and zinc. A particularly preferred combination is a mixture of rhodium and copper. The metal or metals may be added by any of the known techniques. Preferably the metal or metals are added by impregnating the modified crystalline silica with a solution of a compound of the metal or metals in a suitable solvent, such as water, and thereafter removing the solvent. The catalyst may suitably contain from 0.1 to 20%, preferably from 0.2 to 10%, by weight of the metal or metals. It will be appreciated that although the metal may be added in the form of a compound of the metal, under the conditions pertaining during the methanol decomposition process such compounds may well be chemically reduced.

Alternatively or in addition the modified crystalline silica may be mixed with other materials such as the amorphous aluminosilicate described in our European application publication No. EP—A—0009976 or dispersed on a supporting body such as clays, silica, alumina and silica/alumina.

The mixtures of hydrogen and carbon monoxide produced by the process of the present invention may be used in a variety of chemical reactions, including carbonylation, hydrocarbonylation and chemical reduction.

The invention will now be particularly described by reference to the following Examples. In the Examples reference will be made to the molar yield of a particular product which is defined as:

$$\frac{\text{Moles of methanol converted to a particular product}}{\text{Moles of methanol fed}} \times 100$$

Example 1

Preparation of catalyst

Sodium nitrate (0.35 g) was dissolved in aqueous tetrapropyl ammonium hydroxide solution (22.9 g, 20% wt/wt) and then cobalt nitrate hexahydrate (2.9 g) was added. A blue solid was formed. Ludox silica sol, Type AS40 (21.8 g, containing 40% silica) was added with vigorous stirring at room temperature and the suspension was allowed to stand for two hours.

The mixture was placed in a pressure vessel which was rotated and heated at 150°C for 24 hours and then at 170°C for 60 hours. At this point the mixture was cooled to room temperature, filtered and the solid washed by heating with a 1 molar ammonium chloride solution (150 ml). This operation was repeated twice. Finally the solid was washed with deionised water (300 ml), dried at 120°C for 16 hours and broken down to form 8—16 mesh (British Standard) (Opening 2.057 mm to 1.003 mm) granules. Analysis of the solid showed Si 40.5 and Co 6.06% wt/wt, ie a cobalt to silicon atomic ratio of 1:14.

Use of catalyst in a process for the production of synthesis gas from methanol

A gaseous feed of methanol was passed over the catalyst contained in a glass reactor at 400°C and 3.9 seconds contact time.

The molar yields of carbon monoxide and carbon dioxide, based on the total methanol fed were 83 and 0.7% respectively and 16% of the methanol was recovered unchanged.

The hydrogen to carbon monoxide ratio of the synthesis gas obtained was 2:1.

Carbon monoxide and carbon dioxide were analysed by gas chromatography using a thermal conductivity detector and hydrogen was determined by difference.

Example 2

Preparation of catalyst

The following solutions were prepared:

Solution A

| | |
|---|---|
| Cobalt nitrate hexahydrate | 1.45 g |
| Tetrapropylammonium hydroxide (20%) | 22.9 g |
| Sodium nitrate | 0.85 g |
| Deionised water | 22.8 g |

Solution B

| | |
|---|---|
| Ludox silica sol, AS40 | 21.8 g |

Solution A was added slowly to Solution B and stirred for 10 mins. The mixture was transferred to a round bottomed flask and heated under reflux for 7 days with rapid stirring. At this point the mixture was cooled to roomtemperature, filtered and the filter-cake washed with deionised water (300 ml). The solid product was dried at 120°C and calcined by heating in air at 500°C for 16 hours. X-ray diffraction (XRD) analysis of the solid showed it to be crystalline and the XRD pattern is given in the Table.

The X-ray diffraction data was measured by standard techniques. The radiation was the K-alpha doublet of copper.

Use of catalyst in a process for the production of synthesis gas

The catalyst was tested as described in Example 1 and converted methanol selectively into a mixture of carbon monoxide and hydrogen (synthesis gas).

Example 3

Preparation of catalyst

Example 1 was repeated but the following reactants were used:

| | |
|---|---|
| Cobalt nitrate hexahydrate | 3.26 g |
| Tetrapropylammonium hydroxide (20%) | 39.78 g |
| Sodium nitrate | 3.33 g |
| Deionised water | 9.21 g |
| Ludox silica sol, AS40 | 21.8 g |

X-ray diffraction analysis of the product showed it to be a crystalline material with an XRD pattern similar to that shown in the Table.

Use of catalyst in a process for the production of synthesis gas

The catalyst was tested as described in Example 1 and converted methanol selectively into a mixture of carbon monoxide and hydrogen (synthesis gas).

TABLE
X-ray diffraction pattern of cobalt silicate

| Two theta | Inter planar spacing (A°) | Relative intensities $I/I_o$ |
|---|---|---|
| 7.879 | 11.221 | 100 |
| 8.750 | 10.106 | 53 |
| 9.038 | 9.784 | 16 |
| 13.175 | 6.720 | 6 |
| 13.886 | 6.378 | 8 |
| 14.457 | 6.127 | 2 |
| 14.717 | 6.019 | 11 |
| 14.922 | 5.937 | 3 |
| 15.446 | 5.737 | 5 |
| 15.839 | 5.595 | 7 |
| 16.423 | 5.398 | 2 |
| 16.566 | 5.351 | 2 |
| 17.571 | 5.047 | 3 |
| 17.771 | 4.991 | 4 |
| 19.190 | 4.625 | 3 |
| 20.318 | 4.371 | 4 |
| 20.802 | 4.270 | 5 |
| 21.740 | 4.088 | 2 |
| 22.111 | 4.020 | 3 |
| 23.005 | 3.866 | 38 |
| 23.291 | 3.819 | 18 |
| 23.624 | 3.766 | 12 |
| 23.889 | 3.725 | 21 |
| 24.269 | 3.667 | 7 |
| 24.504 | 3.633 | 7 |
| 25.453 | 3.499 | 2 |
| 25.757 | 3.459 | 4 |
| 25.921 | 3.437 | 3 |
| 26.147 | 3.408 | 2 |
| 26.496 | 3.364 | 3 |
| 26.806 | 3.326 | 4 |
| 26.949 | 3.309 | 5 |
| 27.324 | 3.264 | 2 |
| 29.113 | 3.067 | 3 |
| 29.365 | 3.042 | 2 |
| 29.833 | 2.995 | 8 |
| 30.169 | 2.962 | 4 |

**Claims**

1. A process for the production of synthesis gas, that is, a mixture of carbon monoxide and hydrogen, from methanol which process comprises contacting methanol in the vapour phase at elevated temperature with a catalyst comprising a crystalline silica modified by inclusion of cobalt in the crystal lattice in place of a proportion of the silicon atoms, the atomic ratio of cobalt to silicon in the modified crystalline silica being in the range from 1:5 to 1:500.

2. A process according to claim 1 wherein the modified crystalline silica is prepared by mixing in a liquid medium comprising water, an alcohol or a mixture thereof, a source of silicon, a source of cobalt, a nitrogenous base and, optionally a mineralising agent and/or an inorganic base, maintaining the mixture under such conditions of temperature and pressure and for a time sufficient to effect crystallisation of the modified crystalline silica, separating the modified crystalline silica product from the liquid medium and thereafter calcining the product.

3. A process according to claim 2 wherein the nitrogenous base is an alkanolamine.

4. A process according to claim 2 wherein the nitrogenous base is a tetraarylammonium compound in which the alkyl group contains from 1 to 5 carbon atoms.

5. A process according to claim 2 wherein the nitrogenous base is a tetraarylammonium compound in which the aryl group is a phenyl or an alkyl-phenyl group.

6. A process according to any one of the preceding claims wherein to the modified crystalline silica catalyst is added a metal of Group VIII of the Periodic Table either alone or in combination with one or more other metals of Groups I to VIII of the Periodic Table.

7. A process according to claim 6 wherein there is added a mixture of rhodium and copper.

8. A process according to any one of the preceding claims wherein the methanol is contacted with the catalyst at a temperature in the range from 200 to 600°C.

9. A process according to claim 8 wherein the temperature is in the range from 300 to 450°C.

**Revendications**

1. Procédé de production du gaz de synthèse, c'est à dire un mélange de monoxyde de carbone et de l'hydrogène, à partir de méthanol, ce procédé comprenant la mise en contact du méthanol, en phase vapeur à température élevée, avec un catalyseur comprenant une silice cristalline modifiée par inclusion de cobalt dans le réseau cristallin à la place d'une certaine proportion d'atomes de silicium, le rapport atomique du cobalt au silicium se situant, dans la silice cristalline modifiée, entre 1:5 et 1:500.

2. Procédé selon la revendication 1, dans lequel on prépare la silice cristalline modifiée en mélangeant, dans un milieu liquide comprenant de l'eau, un alcool ou un de leurs mélanges, une source de silicium, une source de cobalt, une base azotée et, éventuellement, un agent de minéralisation et/ou une base minérale, en maintenant le mélange dans des conditions de température et de pression et pendant un temps qui suffisent à réaliser la cristallisation de la silice cristalline modifiée, en séparant du milieu liquide de silice cristalline modifiée produite et en calcinant ensuite le produit.

3. Procédé selon la revendication 2, dans lequel la base azotée est une alcanolamine.

4. Procédé selon la revendication 2, dans lequel la base azotée est un composé de tétra-alkylammonium dans lequel le groupe alkyle contient de 1 à 5 atomes de carbone.

5. Procédé selon la revendication 2, dans

lequel la base azotée est un composé de tétraarylammonium dans lequel le groupe aryle est un groupe phényle ou un groupe alkylphényle.

6. Procédé selon l'une quelconque des revendications précédentes, dans lequel on ajoute au catalyseur à base de silice cristalline modifiée un métal du groupe VIII du Tableau Périodique, seul ou en combinaison avec un ou plusieurs autres métaux des groupes I à VIII du Tableau Périodique.

7. Procédé selon la revendication 6, dans lequel on ajoute un mélange de rhodium et de cuivre.

8. Procédé selon l'une quelconque des revendications précédentes, dans lequel on met le méthanol en contact avec le catalyseur à une température comprise entre 200 et 600°C.

9. Procédé selon la revendication 8, dans lequel la température se situe entre 300 et 450°C.

**Patentansprüche**

1. Verfahren zur Herstellung von Synthesegas, das heißt, einer Mischung aus Kohlenmonoxid und Wasserstoff, aus Methanol, welches umfaßt: Inkontaktbringen von Methanol in der Gasphase bei erhöhter Temperatur mit einem Katalysator, der ein kristallines Siliziumoxid, modifiziert durch Einschluß von Kobalt im Kristallgitter anstelle eines Anteils der Siliziumatome, umfaßt, wobei das Atomverhältnis von Kobalt zu Silizium in dem modifizierten kistallinen Siliziumoxid im Bereich von 1:5 bis 1:500 liegt.

2. Verfahren nach Anspruch 1, worin das modifizierte kristalline Siliziumoxid hergestellt wird durch Mischen in einem flüssigen Medium, das Wasser, einen Alkohol oder eine Mischung von diesen umfaßt, von einer Siliziumquelle, einer Kobaltquelle, einer stickstoffhaltigen Base und, gegebenenfalls, einem Mineralisierungsmittel und/oder einer anorganischen Base, wobei die Mischung unter solchen Temperatur- und Druckbedingungen für eine Zeitspanne gehalten wird, die ausreicht, die Kristallisation des modifizierten kristallinen Siliziumoxids zu bewirken, Abtrennen des modifizierten, kristallinen Siliziumoxidproduktes von dem flüssigen Medium und nachfolgendes Kalzinieren des Produktes.

3. Verfahren nach Anspruch 2, worin die stickstoffhaltige Base ein Alkanolamin ist.

4. Verfahren nach Anspruch 2, worin die stickstoffhaltige Base eine Tetraarylammoniumverbindung ist, in welcher die Alkylgruppe von 1 bis 5 Kohlenstoffatomen enthält.

5. Verfahren nach Anspruch 2, worin die stickstoffhaltige Base eine Tetraarylammoniumverbindung ist, in welcher die Arylgruppe eine Phenyl- oder eine Alkylphenylgruppe ist.

6. Verfahren nach einem der vorausgehenden Ansprüche, worin zu dem modifizierten, kristallinen Siliziumoxidkatalysator ein Metall der Gruppe VIII des Periodischen Systems entweder allein oder in Kombination mit einem oder mehreren anderen Metallen der Gruppen I bis VIII des Periodischen Systems zugegeben wird.

7. Verfahren nach Anspruch 6, worin eine Mischung von Rhodium und Kupfer zugegeben wird.

8. Verfahren nach einem der vorausgehenden Ansprüche, worin das Methanol mit dem Katalysator bei einer Temperatur im Bereich von 200 bis 600°C in Kontakt gebracht wird.

9. Verfahren nach Anspruch 8, worin die Temperatur im Bereich von 300 bis 450°C liegt.